(19) Europäisches Patentamt European Patent Office Office européen des brevets

(11) **EP 2 074 705 B1**

(12) **FASCICULE DE BREVET EUROPEEN**

(45) Date de publication et mention
de la délivrance du brevet:
**09.02.2011 Bulletin 2011/06**

(21) Numéro de dépôt: **07823599.1**

(22) Date de dépôt: **18.07.2007**

(51) Int Cl.:
***H04B 3/32*** *(2006.01)*

(86) Numéro de dépôt international:
**PCT/FR2007/051680**

(87) Numéro de publication internationale:
**WO 2008/009853 (24.01.2008 Gazette 2008/04)**

(54) **Procédé et dispositifs pour l'estimation des coefficients de couplage télédiaphonique lors de la mise en service d'une ligne**

Verfahren und Vorrichtungen um die Übersprechungskoeffizienten bei Inbetriebnahme einer Leitung zu schätzen

Method and devices for estimating crosstalk coefficients when a line is taken into operation

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.07.2006 FR 0653079**

(43) Date de publication de la demande:
**01.07.2009 Bulletin 2009/27**

(73) Titulaire: **FRANCE TELECOM**
**75015 Paris (FR)**

(72) Inventeurs:
• **LE MASSON, Jérôme**
  **F-22300 Lannion (FR)**
• **OUZZIF, Meryem**
  **F-22300 Lannion (FR)**
• **WAHIBI, Issam**
  **F-22300 Lannion (FR)**

(56) Documents cités:
**EP-A1- 1 109 329        WO-A-01/45432**
**US-A1- 2006 153 106**

**Description**

La présente invention concerne un procédé d'estimation de canal dans un système coordonné à modulation multi-porteuses, lors de la mise en service d'une ligne.

L'invention trouve une application particulièrement avantageuse dans le domaine de la transmission de données sur des lignes constituées par des paires de cuivre, notamment dans les systèmes connus sous le nom de DSL (« Digital Subscriber Line ») utilisant une modulation multi-porteuses de type DMT (« Discrete MultiTone »).

Dans ces systèmes, chaque ligne relie dans le sens descendant un multiplexeur à un utilisateur final. Pour un ensemble d'utilisateurs finaux donnés, à l'intérieur d'un même immeuble par exemple, les lignes peuvent être regroupées dans un seul câble connecté à la sortie du multiplexeur, tel qu'un multiplexeur DSLAM (« Digital Subscriber Line Access Multiplexor ») dans une unité optique de réseau ONU (« Optical Network Unit »).

Le signal utile émis par le multiplexeur le long d'une ligne à destination d'un utilisateur final est transmis au moyen d'une pluralité de porteuses dont l'ensemble forme un « symbole ». Le nombre de porteuses est variable et vaut en général quelques milliers, 4096 ou 8192 par exemple, et l'intervalle entre deux porteuses est de l'ordre de 4 ou 8 kHz. Un symbole DMT peut donc couvrir une bande de fréquences allant jusqu'à 30 MHz.

A l'intérieur d'un même câble, les couplages électromagnétiques entre les lignes sont à l'origine du phénomène de « télédiaphonie », de tels couplages sont dits télédiaphoniques. Ce phénomène parasite a pour conséquence que le signal reçu par un utilisateur final à l'extrémité d'une ligne contient non seulement le signal qui lui est destiné sur cette ligne mais également les signaux émis dans le même sens sur les autres lignes de manière certes atténuée mais cependant perceptible. De tels signaux sont appelés signaux télédiaphoniques.

C'est pour limiter la télédiaphonie entre les lignes en voie descendante, c'est-à-dire du multiplexeur vers l'utilisateur, que l'on a recours à des systèmes dits « coordonnés » dans lesquels un traitement conjoint est appliqué aux symboles transmis afin de prendre en compte les interférences entre les lignes. Cette opération de précompensation est en général implémentée dans le multiplexeur. La précompensation proposée dans l'article de R. Cendrillon, M. Moonen, J. Verlinden, T. Bostoen, G. Ginis, « Improved linear crosstalk precompensation for DSL », IEEE International Conference on Acoustics, Speech and Signal Processing, ICASSP'04, vol. 4, pp. 1053-1056, Mai 2004, permet d'éliminer presque entièrement la télédiaphonie en voie descendante.

Cependant, la mise en place d'une précompensation dans les systèmes coordonnés nécessite la connaissance des coefficients de couplage télédiaphonique entre les lignes.

L'invention se place exactement dans cette perspective, en particulier lorsqu'une ligne active supplémentaire, qui sera notée K, est mise en service au milieu de K-1 lignes déjà actives, notées de 1 à K-1, sur un nombre total de N lignes.

Différents procédés d'estimation ont été proposés pour résoudre ce problème dans le cas de systèmes DSL coordonnés :

- des procédés basés sur des séquences pilotes, qui consistent à transmettre des symboles connus à l'avance des récepteurs disposés à l'extrémité de chaque ligne. Un traitement approprié des signaux reçus permet d'estimer la réponse du canal dans le domaine temporel ou fréquentiel ;
- des procédés d'estimation dits aveugles, basés sur la statistique du signal transmis. Ces procédés ne nécessitent pas de connaître ce signal pour estimer le canal ;
- des procédés dits centralisés, dans lesquels un système tiers analyse le signal émis et le signal reçu afin d'estimer la réponse du canal.

Ces procédés connus présentent toutefois un certain nombre d'inconvénients.

Les procédés du premier type sont simples du point de vue algorithmique, mais obligent à réinitialiser en même temps tous les utilisateurs actifs, à savoir ceux dont le modem est en fonctionnement, avec pour conséquence l'obligation d'interrompre la transmission lors de la mise en service d'un nouvel utilisateur K.

Les procédés du deuxième type présentent une complexité qui croît très rapidement avec la taille de la constellation de symboles choisie, ce qui les rend difficilement applicables avec les modulations d'ordre élevé envisagées pour les systèmes considérés ici. En effet, les tailles des constellations utilisables dans les systèmes DSL peuvent atteindre $2^{15}$ états.

Enfin, les procédés du troisième type nécessitent d'importants transferts de données vers un système centralisé.

Le document EP 1 109 329 décrit un dispositif dans l'état de la technique pour résoudre le problème de la détermination des coefficients de télédiaphonie.

Aussi, le problème technique à résoudre par l'objet de la présente invention est de proposer un procédé d'estimation de canal dans un système coordonné à modulation multi-porteuses de N lignes comprenant K-1 lignes actives sur lesquelles sont émis des signaux utiles par un multiplexeur, lors de la mise en service d'une ligne active supplémentaire K, procédé qui permettrait d'effectuer l'estimation des coefficients de couplage télédiaphonique avec un nouvel utilisateur de manière simple et sans perturber ni interrompre les transmissions déjà coordonnées vers les utilisateurs actifs, ceci afin de pouvoir mettre en oeuvre une précompensation ou tout autre système permettant de supprimer la télédiaphonie en voie descendante.

La solution au problème technique posé consiste, selon la présente invention, en ce que ledit procédé comprend les opérations suivantes, effectuées sur chaque symbole d'une séquence de $n_1$ symboles successifs :

- réception, sur la ligne K et dans un premier ensemble $P$ de porteuses, d'un signal télédiaphonique desdits signaux utiles,
- émission par ledit multiplexeur et réception, sur la ligne K et dans un deuxième ensemble $Q$ de porteuses, des signaux utiles émis sur les lignes actives dans ledit premier ensemble $P$ de porteuses,
- estimation pour le premier ensemble $P$ de porteuses des coefficients de couplage télédiaphonique des K-1 lignes actives vers la ligne K.

Ainsi, le procédé conforme à l'invention utilise comme signaux pour l'estimation du couplage télédiaphonique entre les K-1 lignes actives et la ligne active supplémentaire K les signaux utiles émis par le multiplexeur sur les K-1 lignes actives dans le premier ensemble $P$ de porteuses. En outre, ces signaux sont transmis par le multiplexeur au récepteur de la ligne K directement sur la ligne K dans le deuxième ensemble $Q$ de porteuses. La comparaison entre les signaux utiles reçus sur la ligne K dans le premier ensemble $P$ de porteuses et les signaux télédiaphoniques reçus également dans le premier ensemble $P$ de porteuses permet alors une estimation des coefficients de couplage télédiaphonique recherchés pour les porteuses de l'ensemble $P$. L'invention prévoit ensuite que les coefficients de couplage télédiaphonique entre la ligne K et les K-1 lignes actives, pour l'ensemble des porteuses, sont déterminés par interpolation des coefficients de couplage télédiaphonique estimés pour le premier ensemble $P$ de porteuses.

Ledit procédé comprend en outre une opération d'estimation des coefficients de couplage télédiaphonique de la ligne K aux N-K lignes inactives.

Selon un premier mode de réalisation, ladite opération d'estimation des coefficients de couplage télédiaphonique des N-K lignes inactives comprend les étapes suivantes, effectuées sur chaque symbole d'une séquence de $n_2$ symboles successifs, consécutive à ladite séquence de $n_1$ symboles :

- émission par ledit multiplexeur et réception, sur la ligne K et dans ledit deuxième ensemble $Q$ de porteuses, des signaux utiles émis sur les lignes actives dans ledit premier ensemble $P$ de porteuses,
- émission par ledit multiplexeur, sur les N-K lignes inactives et dans ledit premier ensemble $P$ de porteuses, de signaux pilotes,
- réception, sur la ligne K et dans ledit premier ensemble $P$ de porteuses, d'un signal télédiaphonique desdits signaux pilotes,
- estimation pour le premier ensemble $P$ de porteuses des coefficients de couplage télédiaphonique des N-K lignes inactives vers la ligne K.

Selon un deuxième mode de réalisation, ladite opération d'estimation des coefficients de couplage télédiaphonique des N-K lignes inactives comprend les étapes suivantes, effectuées sur chaque symbole de ladite séquence de $n_1$ symboles successifs :

- émission par ledit multiplexeur, sur les N-K lignes inactives et dans ledit premier ensemble $P$ de porteuses, de signaux pilotes formant des séquences orthogonales choisies dans le supplémentaire orthogonal des séquences formées par lesdits signaux utiles,
- réception sur la ligne K et dans ledit premier ensemble $P$ de porteuses, d'un signal télédiaphonique desdits signaux pilotes,
- émission par ledit multiplexeur et réception, sur la ligne K et dans ledit deuxième ensemble $Q$ de porteuses, des signaux pilotes émis sur les N-K lignes inactives dans le premier ensemble $P$ de porteuses,
- estimation pour le premier ensemble $P$ de porteuses des coefficients de couplage télédiaphonique des N-K lignes inactives vers la ligne K.

Les coefficients de couplage télédiaphonique étant estimés pour les porteuses du premier ensemble $P$, les coefficients de couplage télédiaphonique des K-1 lignes actives vers la ligne K, pour l'ensemble des porteuses, sont ensuite estimés par interpolation des coefficients de couplage télédiaphonique déterminés pour le premier ensemble $P$ de porteuses.

L'invention concerne également un programme d'ordinateur comprenant des instructions de code de programme pour l'exécution des étapes du procédé selon l'invention lorsque ledit programme est exécuté sur un ordinateur.

L'invention concerne en outre un multiplexeur dans un système coordonné à modulation multi-porteuses. Lorsque le système coordonné de N lignes comporte K-1 lignes actives, ledit multiplexeur est remarquable en ce que, lors de la mise en service d'une ligne active supplémentaire K, ledit multiplexeur est apte :

- à émettre des signaux utiles sur les K-1 lignes actives,
- puis, sur chaque symbole d'une séquence de $n_1$ symboles successifs, à émettre, sur la ligne K et dans un deuxième ensemble $Q$ de porteuses, les signaux utiles émis sur les lignes actives dans un premier ensemble $P$ de porteuses.

L'invention concerne enfin un récepteur d'une ligne K dans un système coordonné à modulation multi-porteuses de N lignes comprenant K-1 lignes actives sur lesquelles sont émis des signaux utiles par un multiplexeur, remarquable en ce que, lors de la mise en service de la ligne K, ledit récepteur est apte, sur chaque symbole d'une séquence de $n_1$ symboles successifs, à :

- recevoir, dans un premier ensemble $P$ de porteuses, un signal télédiaphonique desdits signaux utiles,
- recevoir, dans un deuxième ensemble $Q$ de porteuses, des signaux utiles émis par ledit multiplexeur sur les lignes actives dans ledit premier ensemble $P$ de porteuses,
- estimer pour le premier ensemble $P$ de porteuses des coefficients de couplage télédiaphonique des K-1 lignes actives vers la ligne K.

La description qui va suivre en regard des dessins annexés, donnés à titre d'exemples non limitatifs, fera bien comprendre en quoi consiste l'invention et comment elle peut être réalisée.

La figure 1 est un schéma d'un système coordonné comportant N lignes.
La figure 2 est un schéma montrant une répartition des porteuses de la modulation DMT dans les ensembles $P$ et $Q$.
La figure 3 est un schéma montrant les signaux transmis sur les N lignes du système sur les porteuses de l'ensemble $P$ lors de la mise en oeuvré d'un premier mode de réalisation du procédé conforme à l'invention.
La figure 4 est un schéma montrant les signaux transmis sur les N lignes du système sur les porteuses de l'ensemble $P$ lors de la mise en oeuvre d'un second mode de réalisation du procédé conforme à l'invention.
La figure 5A représente de manière schématique un multiplexeur conforme à l'invention.
La figure 5B représente schématiquement un récepteur d'une ligne K conforme à l'invention.

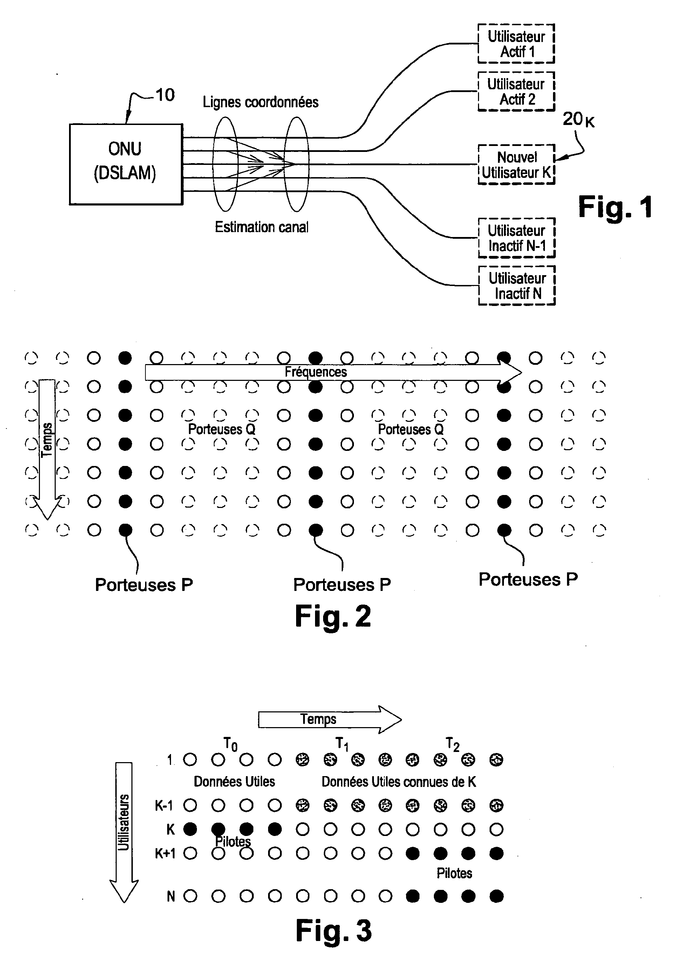

Sur la figure 1 est représenté un système DSL coordonné comportant N lignes et donc potentiellement N utilisateurs. Les lignes de ces utilisateurs sont colocalisées et font l'objet d'un traitement conjoint de précompensation en émission pour la voie descendante. Parmi ces N lignes d'utilisateurs, on supposera que les K-1 premières sont actives, la K$^{\text{ième}}$ étant mise en service, et que les N-K autres sont inactives. A partir du multiplexeur DSLAM 10, le système est capable d'émettre sur les N lignes et peut effectuer une précompensation vers les K-1 premières lignes. Le but recherché est de déterminer les coefficients de couplage télédiaphonique de l'ensemble des utilisateurs vers l'utilisateur K afin de l'intégrer au sein de l'ensemble des K-1 lignes actives déjà soumises à précompensation. Pour cela, le procédé d'estimation décrit est mis en oeuvre entre le multiplexeur DSLAM 10 et le modem 20k de l'utilisateur K à l'extrémité de la ligne K.

Le système de transmission considéré ici utilise une modulation multi-porteuses par exemple de type DMT, comme celle décrite dans la norme VDSL2 (Very high speed DSL). Les voies montantes et descendantes utilisent des bandes de fréquence séparées, ce qui correspond à un mode connu sous l'acronyme FDD (Frequency Division Duplexing).

D'une manière générale, la relation entre l'entrée et la sortie d'un canal de transmission peut s'écrire :

$$y(f) = H(f).x(f) + n(f)$$

x étant le signal émis, y le signal reçu, la matrice H la fonction de transfert du canal et n un bruit additif blanc gaussien. L'index fréquentiel f sera omis dans la suite. La diagonale de H correspond aux atténuations des lignes et les éléments non diagonaux représentent les coefficients de couplage télédiaphonique entre les lignes.

Avant mise en service de la ligne active supplémentaire K, l'estimée de la matrice de transfert du canal s'écrit :

$$\hat{H}_{K-1} = [\hat{H}^{(1)}_{K-1} \quad \hat{H}^{(2)}_{K-1}]$$

où $\hat{H}^{(1)}_{K-1}$ est une matrice carrée à K-1 lignes et K-1 colonnes décrivant le canal constitué des K-1 lignes actives. C'est cette matrice qui permet d'appliquer une précompensation aux K-1 lignes actives.

$\hat{H}^{(2)}_{K-1}$ est une matrice à K-1 lignes et N-K+1 colonnes décrivant le couplage télédiaphonique des N-K+1 lignes inactives vers les K-1 lignes actives.

Bien que l'indice fréquentiel soit maintenant omis, il faut rappeler que les matrices précitées doivent être estimées pour chaque porteuse des symboles utilisés.

La mise en service de la ligne K conduit à estimer une nouvelle matrice de transfert de canal $\hat{H}_K$ qui se déduit de la matrice précédente $\hat{H}_{K-1}$ par l'addition d'une ligne qui s'écrit :

$$[\hat{h}^{(1)}_K \quad \hat{h}_{K,K} \quad \hat{h}^{(2)}_K]$$

où $\hat{h}^{(1)}_K$ est une matrice uniligne à K-1 colonnes représentant les coefficients de couplage télédiaphonique des K-1 lignes actives vers la ligne active supplémentaire K, $\hat{h}_{K,K}$ est un scalaire égal à l'atténuation sur la ligne K, et $\hat{h}^{(2)}_K$ est une matrice uniligne à N-K colonnes représentant les coefficients de couplage télédiaphonique de la ligne K aux N-K lignes inactives restantes.

L'objet de l'invention est de proposer un procédé pour estimer $\hat{h}^{(1)}_K$, $\hat{h}_{K,K}$ et $\hat{h}^{(2)}_K$.

Lors de l'initialisation du procédé, les porteuses utilisées en voie descendante sont réparties en deux ensembles. Un premier ensemble P de porteuses de l'utilisateur K est dédié à l'estimation proprement dite des coefficients de couplage télédiaphonique. Le reste des porteuses constituant le deuxième ensemble Q est utilisé pour informer l'utilisateur K du signal transmis vers les autres utilisateurs sur les porteuses dédiées de type P. Une méthode d'interpolation permettra de déterminer les coefficients de couplage télédiaphonique pour l'ensemble des porteuses utiles. Les porteuses de l'ensemble P peuvent être choisies régulièrement espacées d'un intervalle supérieur à N de manière à disposer de suffisamment de porteuses de type Q pour transmettre les informations utiles à l'estimation. La figure 2 montre un exemple de répartition des porteuses de type P et Q.

Pour permettre la transmission d'information à l'utilisateur K grâce aux porteuses de type Q le coefficient d'atténuation $\hat{h}_{K,K}$ de la ligne K doit d'abord être connu.

Pour cela, une séquence pilote $p_K$ est transmise sur cette ligne pendant un intervalle de temps $T_0$, soit un nombre $n_0$ de symboles, sur l'ensemble des porteuses de type P et Q. Cette séquence $p_K$ est connue du récepteur K. Si $y_K$ est le signal reçu par ce récepteur pendant l'intervalle de temps $T_0$, alors une estimation de l'atténuation de la ligne est donnée par :

$$\hat{h}_{K,K} = y_K . p_K / p_K . p^H_K$$

$(.)^H$ représentant l'opérateur de transposée hermitienne. Afin de ne pas perturber les transmissions en cours sur les K-1 lignes actives, l'émission de la séquence pilote $p_K$ doit être prise en compte par le système de précompensation des K-1 lignes actives. Cette prise en compte met en jeu la première colonne, colonne K, de la matrice $\hat{H}^{(2)}_{K-1}$ donnant les coefficients de couplage télédiaphonique de la ligne K vers les K-1 lignes actives.

L'intervalle de temps $T_0$ dépend de la précision souhaitée sur la mesure de l'atténuation $\hat{h}_{K,K}$.

On va maintenant décrire en détails comment l'estimation de la matrice $\hat{h}^{(1)}_K$ est effectuée conformément au procédé, objet de l'invention.

Cette estimation se déroule pendant un intervalle de temps $T_1$ correspondant à un nombre $n_1$ de symboles.

Les signaux utiles normalement émis par le multiplexeur DSLAM 10 sur les K-1 lignes actives sont détectés, pour chaque symbole, par le récepteur de la ligne K dans les porteuses du premier ensemble P défini plus haut, sous la forme d'un signal télédiaphonique mettant en jeu précisément les coefficients de la matrice $\hat{h}^{(1)}_K$ recherchée. Ce signal télédiaphonique est donc reçu pendant $n_1$ temps symboles.

Par ailleurs, dans le même temps, le multiplexeur DSLAM 10 envoie au récepteur de la ligne K ceux des signaux utiles contenus dans les porteuses de l'ensemble P, mais cette fois-ci directement sur la ligne K et dans les porteuses du deuxième ensemble Q, ces signaux utiles jouant le rôle de signaux pilotes pour le récepteur K. La connaissance de l'atténuation $\hat{h}_{K,K}$ de la ligne K précédemment estimée permet une détection correcte des signaux ainsi transmis.

Afin de ne pas perturber les K-1 lignes actives par l'émission de signaux sur la ligne K, il est effectué une précompensation identique à celle effectuée plus haut pour la détermination de l'atténuation de la ligne K.

Le récepteur de la ligne K dispose alors de données suffisantes pour calculer la matrice $\hat{h}^{(1)}_K$ pour chaque porteuse de type P. Ces données se présentent comme un système linéaire de $n_1$ équations à K-1 inconnues qui sont les K-1 coefficients de couplage télédiaphonique de la matrice $\hat{h}^{(1)}_K$. La résolution de ce système conduit à l'estimation des coefficients de couplage télédiaphonique et donc de $\hat{h}^{(1)}{}_K$ pour chaque porteuse de l'ensemble *P*. Pour obtenir une meilleure précision, il y a avantage à ce que $n_1$ soit au moins égal K-1.

En d'autres termes, si S est la matrice des signaux utiles envoyés sur les K-1 lignes actives durant l'intervalle de temps $T_1$ sur les porteuses de type *P*, alors S est transmis sur la ligne K en utilisant les porteuses de type *Q*. Une estimation de type LS (« Least Square ») S de S effectuée par le récepteur K est utilisée pour calculer les valeurs des couplages télédiaphoniques des lignes K-1 lignes actives à la ligne K :

$$\hat{h}^{(1)}{}_K = y_K \hat{S}^H (\hat{S}\hat{S}^H)^{-1}$$

Une interpolation à partir des coefficients de couplage télédiaphonique estimés aux porteuses *P* permet de déterminer les coefficients de couplage télédiaphonique sur l'ensemble des porteuses.

Une deuxième opération du procédé conforme à l'invention consiste à estimer la matrice $\hat{h}^{(2)}{}_K$ des coefficients de couplage télédiaphonique de la ligne K aux N-K lignes inactives.

Pour cela, l'invention propose deux méthodes.

Selon la première méthode, pendant l'émission d'une séquence de $n_2$ symboles de durée totale $T_2$, consécutive à la première séquence de durée $T_1$, les signaux utiles émis par le multiplexeur DSLAM 10 sur les K-1 lignes actives sur les porteuses de l'ensemble *P* continuent à être transmises au récepteur K grâce aux porteuses de l'ensemble *Q* comme durant la séquence $T_1$.

Pendant le même intervalle de temps $T_2$, des séquences pilotes sont émises sur les N-K lignes inactives dans les porteuses de type *P*.

Le récepteur K reçoit donc, d'une part, des signaux provenant du couplage télédiaphonique des K-1 lignes actives, ces signaux pouvant être annulés du fait que les coefficients de couplage télédiaphonique et les signaux utiles sont connus du récepteur K, et, d'autre part, les séquences pilotes à travers le couplage télédiaphonique des N-K lignes inactives.

La figure 3 montre l'utilisation des porteuses de l'ensemble *P* durant les différentes phases $T_0$, $T_1$ et $T_2$.

Les coefficients de la matrice $\hat{h}^{(2)}{}_K$ sont donc les inconnues d'un système linéaire de $n_2$ équations à N-K inconnues. La résolution de ce système fournit les coefficients de couplage télédiaphonique recherchés. De préférence, $n_2$ est choisi au moins égal à N-K.

Si les signaux pilotes P transmis ont une puissance moyenne $\sigma^2{}_p$ et que les séquences sont orthogonales, on a alors :

$$PP^H = \sigma^2{}_p T_2 . I$$

où I est la matrice identité de dimensions (N-K)×(N-K), et

$$\hat{h}^{(2)}{}_K = (y_K - \hat{h}^{(1)}{}_K \hat{S}^H) P^H (PP^H)^{-1} = (y_K - \hat{h}^{(1)}{}_K \hat{S}^H) P^H / \sigma^2{}_p T_2$$

On rappelle que deux séquences $S^i = [s^i{}_1\ s^i{}_2....s^i{}_n]$ et $S^j = [s^j{}_i\ s^j{}_2\ ....s^j{}_n]$ non nulles sont orthogonales si $S^i S^{jH} = 0$, où i et j sont des indices de ligne et n le nombre de symboles.

Un interpolation sur les porteuses de l'ensemble *P* permet d'estimer les coefficients de couplage télédiaphonique de la ligne K aux N-K lignes inactives sur l'ensemble des porteuses.

La deuxième méthode consiste à déterminer la matrice $\hat{h}^{(2)}{}_K$ pendant la durée $T_1$, simultanément à la détermination de la matrice $\hat{h}^{(1)}{}_K$.

Pour cela, les séquences pilotes des N-K lignes inactives sont choisies dans le supplémentaire orthogonal de l'espace défini par les séquences des signaux utiles émis sur les K-1 lignes actives.

S représentant les signaux émis sur les lignes K-1 lignes actives et P les signaux pilotes émis sur les lignes N-K lignes inactives, on note W la matrice composée de S et P sous la forme :

$$W = \begin{vmatrix} S \\ P \end{vmatrix}$$

Chaque ligne de la matrice P est orthogonale à chacune des lignes de la matrice S et les lignes de la matrice P sont orthogonales entre elles.

Les valeurs de la matrice W sont transmises au récepteur K par les porteuses de type $Q$. On note $\hat{W}$ les valeurs reçues. L'estimateur LS donne alors directement les N-1 coefficients de couplage télédiaphonique recherchés :

$$[\hat{h}^{(1)}{}_K \quad \hat{h}^{(2)}{}_K] = y_K \hat{W}^H (\hat{W}\hat{W}^H)^{-1}$$

sachant que :

$$\hat{W}\hat{W}^H \approx \begin{vmatrix} \hat{S}\hat{S}^H & 0 \\ 0 & \sigma^2{}_\rho T_1.I \end{vmatrix}$$

Le choix des séquences pilotes dans le supplémentaire orthogonal permet ainsi de simplifier le calcul de l'inverse de WW$^H$.

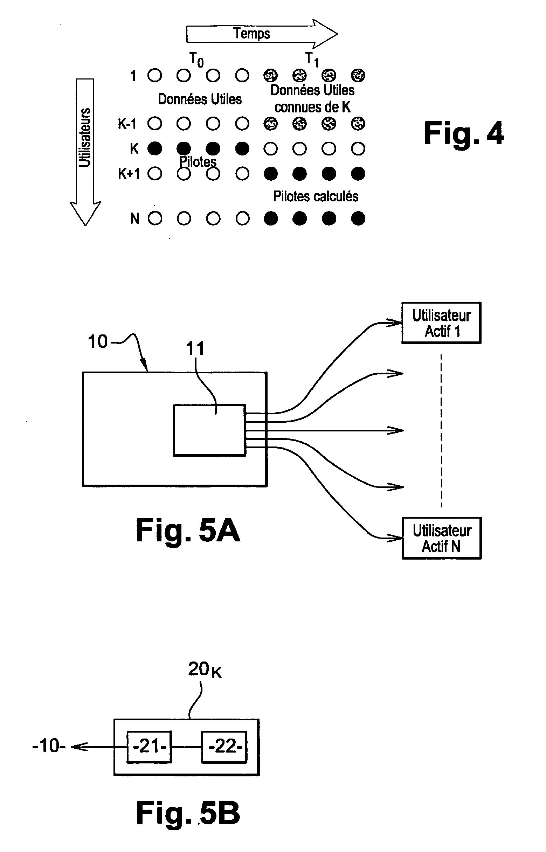

Les signaux transmis sur les porteuses $P$ durant les différentes phases sont représentés sur la figure 4.

La première méthode offre une procédure d'estimation moins complexe car elle évite le calcul du supplémentaire orthogonal, mais plus longue. A l'inverse, la deuxième méthode permet une procédure plus courte au prix d'une complexité de calcul augmentée.

Une précompensation reposant sur le procédé d'estimation selon l'invention va maintenant être décrite.

Lors de la transmission impliquant les seules K-1 lignes actives, une précompensation notée $P^{(1)}{}_{K-1}$ basée sur la matrice de canal $\hat{H}^{(1)}{}_{K-1}$ est utilisée. Cette précompensation peut être celle proposée dans l'article précité de R. Cendrillon et al.

Puis, lors de la mise en oeuvre du procédé d'estimation conforme à l'invention, des signaux sont émis sur les N-K+1 lignes alors inactives. Ces signaux peuvent être précompensés sur les K-1 lignes actives de manière à ne pas perturber la transmission en cours. On utilisera à cet effet sur l'ensemble des N lignes la précompensation suivante :

$$P_{K-1} = \begin{vmatrix} P^{(1)}{}_{K-1} & P^{(2)}{}_{K-1} \\ 0 & I \end{vmatrix}$$

Dans cette configuration, $P^{(2)}{}_{K-1}$ peut être déterminé à partir de $P^{(1)}{}_{K-1}$, $\hat{H}^{(1)}{}_{K-1}$ et $\hat{H}^{(2)}{}_{K-1}$.

A la fin du procédé d'estimation, on obtient la matrice $\hat{H}_K$ permettant de déterminer la précompensation $P^{(1)}{}_K$ pour K lignes actives puis $P^{(2)}{}_K$ lors de la mise en service d'une K+1$^{ième}$ ligne active.

La figure 5A représente de manière schématique un multiplexeur DSLAM 10 conforme à l'invention. Un tel multiplexeur DSLAM 10 comporte des moyens 11 d'émission de signaux. Tout signal issu du multiplexeur DSLAM 10 est émis par les moyens d'émission 11.

La figure 5B représente un récepteur d'une ligne K conforme à l'invention. Un tel récepteur comporte des moyens de réception 21 des différents signaux émis par le multiplexeur DSLAM 10 et connectés à ces moyens de réception 22 des moyens d'estimation de canal 22.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

**Revendications**

1. Procédé d'estimation, dans un système coordonné à modulation multi-porteuses de N lignes comportant K-1 lignes actives sur lesquelles sont émis des signaux utiles dans un premier ensemble de porteuses $P$, de coefficients de couplage télédiaphonique des K-1 lignes vers une ligne K supplémentaire lors de sa mise en service, **caractérisé en ce que** ledit procédé met en oeuvre les étapes suivantes sur chaque symbole d'une séquence de $n_1$ symboles successifs:

   - réception sur la ligne active K desdits signaux utiles dans un deuxième ensemble $Q$ de porteuses,
   - réception sur la ligne active K desdits signaux utiles sous la forme d'un signal télédiaphonique dans le premier ensemble $P$ de porteuses.
   - estimation des coefficients de couplage télédiaphonique à partir des signaux utiles reçus dans le deuxième ensemble $Q$ de porteuses et du signal télédiaphonique reçu dans le premier ensemble $P$ de porteuses,

2. Procédé selon la revendication 1, **caractérisé en ce que** ledit procédé ledit procédé met en oeuvre les étapes suivantes sur chaque symbole d'une séquence de $n_2$ symboles successifs, consécutive à ladite séquence de $n_1$ symboles :

   - réception sur la ligne active K de signaux pilotes dans le deuxième ensemble $Q$ de porteuses, lesdits signaux pilotes étant émis dans le premier ensemble de porteuses $P$ sur N-K lignes inactives du système
   - réception sur la ligne active K desdits signaux pilotes sous la forme d'un signal télédiaphonique dans le premier ensemble $P$ de porteuses,
   - estimation des coefficients de couplage télédiaphonique des N-K lignes inactives vers la ligne K à partir des signaux pilotes reçus dans le deuxième ensemble $Q$ de porteuses et du signal télédiaphonique de signaux pilotes reçu dans le deuxième ensemble $P$ de porteuses.

3. Programme d'ordinateur comprenant des instructions de code de programme pour la mise en oeuvre des étapes du procédé d'estimation selon la revendication 1 lorsque le programme est exécuté par un processeur.

4. Support d'enregistrement lisible par un dispositif de traduction sur lequel est enregistré le programme selon la revendication 3.

5. Récepteur d'une ligne K appartenant à un système coordonné à modulation multi-porteuses de N lignes comportant K-1 lignes actives sur lesquelles sont émis des signaux utiles dans un premier ensemble de porteuses $P$, **caractérisé en ce que** le récepteur comprend :

   - des moyens de réception desdits signaux utiles dans un deuxième ensemble $Q$ de porteuses sur une ligne active supplémentaire K destinée à être mise en service,
   - des moyens de réception sur la ligne active K desdits signaux utiles sous la forme d'un signal télédiaphonique dans le premier ensemble $P$ de porteuses,
   - des moyens d'estimation de coefficients de couplage télédiaphonique des K-1 lignes vers la ligne K à partir des signaux utiles reçus dans le deuxième ensemble $Q$ de porteuses et du signal télédiaphonique reçu dans le premier ensemble $P$ de porteuses.

6. Système coordonné à modulation multi-porteuses de N lignes comportant K-1 lignes actives sur lesquelles des signaux utiles sont émis par un multiplexeur dans un premier ensemble de porteuses $P$, le multiplexeur reliant chacune des N lignes à un récepteur **caractérisé en ce que** le multiplexeur comprend :

   - des moyens d'émission sur les K-1 lignes actives des signaux utiles dans le premier ensemble $P$ de porteuses,

- des moyens d'émission sur une ligne active K supplémentaire destinée à être mise en service, desdits signaux utiles dans un deuxième ensemble *Q* de porteuses, et **en ce que** le récepteur comprend :
- des moyens de réception desdits signaux utiles dans le deuxième ensemble *Q* de porteuses,
- des moyens de réception desdits signaux utiles sous la forme d'un signal télédiaphonique dans le premier ensemble *P* de porteuses,
- des moyens d'estimation de coefficients de couplage télédiaphonique des K-1 lignes vers la ligne K à partir des signaux utiles reçus dans le deuxième ensemble *Q* de porteuses et du signal télédiaphonique reçu dans le premier ensemble *P* de porteuses.

**Claims**

1. Method of estimating, in a coordinate system with multicarrier modulation of N lines comprising K-1 active lines over which useful signals are sent in a first set of carriers *P*, far-end crosstalk coupling coefficients from the K-1 lines to an additional line K when placing it in service, **characterized in that** said method implements the following steps on each symbol of a sequence of $n_1$ successive symbols:

   - reception over the active line K of said useful signals in a second set *Q* of carriers,
   - reception over the active line K of said useful signals in the form of a far-end crosstalk signal in the first set *P* of carriers,
   - estimation of the far-end crosstalk coupling coefficients from the useful signals received in the second set *Q* of carriers and from the far-end crosstalk signal received in the first set *P* of carriers.

2. Method according to Claim 1, **characterized in that** said method applies the following steps to each symbol of a sequence of $n_2$ successive symbols, following said sequence of $n_1$ symbols:

   - reception over the active line K of pilot signals in the second set *Q* of carriers, said pilot signals being sent in the first set of carriers *P* over N-K inactive lines of the system,
   - reception over the active line K of said pilot signals in the form of a far-end crosstalk signal in the first set *P* of carriers,
   - estimation of the far-end crosstalk coupling coefficients from the N-K inactive lines to the line K from the pilot signals received in the second set *Q* of carriers and from the far-end crosstalk signal of pilot signals received in the second set *P* of carriers.

3. Computer program comprising program code instructions for implementing the steps of the estimation method according to Claim 1 when the program is run by a processor.

4. Storage medium readable by a translation device on which is stored the program according to Claim 3.

5. Receiver of a line K belonging to a coordinate system with multicarrier modulation of N lines comprising K-1 active lines over which useful signals are sent in a first set of carriers *P*, **characterized in that** the receiver comprises:

   - means of receiving said useful signals in a second set *Q* of carriers over an additional active line K intended to be placed in service,
   - means of receiving said useful signals over the active line K in the form of a far-end crosstalk signal in the first set *P* of carriers,
   - means of estimating far-end crosstalk coupling coefficients from the K-1 lines to the line K from the useful signals received in the second set *Q* of carriers and from the far-end crosstalk signal received in the first set *P* of carriers.

6. Coordinate system with multicarrier modulation of N lines comprising K-1 active lines over which useful signals are sent by a multiplexer in a first set of carriers *P*, the multiplexer linking each of the N lines to a receiver, **characterized in that** the multiplexer comprises:

   - means o sen ing useful signals over the K-1 active lines in the first set *P* of carriers,
   - means of sending, over an additional active line K intended to be placed in service, said useful signals in a second set *Q* of carriers, and **in that** the receiver comprises:
   - means of receiving said useful signals in the second set *Q* of carriers,

- means of receiving said useful signals in the form of a far-end crosstalk signal in the first set $P$ of carriers,
- means of estimating far-end crosstalk coupling coefficients from the K-1 lines to the line K from the useful signals received in the second set $Q$ of carriers and from the far-end crosstalk signal received in the first set $P$ of carriers.

**Patentansprüche**

1. Verfahren zur Schätzung, in einem koordinierten System mit Mehrträger-Modulation von N Leitungen, das K-1 aktive Leitungen aufweist, über die Nutzsignale in einer ersten Einheit von Trägern P gesendet werden, von Fernnebensprech-Kopplungskoeffizienten der K-1 Leitungen zu einer zusätzlichen Leitung K bei ihrer Inbetriebnahme, **dadurch gekennzeichnet, dass** das Verfahren die folgenden Schritte an jedem Symbol einer Folge von $n_1$ auf-einanderfolgenden Symbolen anwendet:

   - Empfang über die aktive Leitung K der Nutzsignale in einer zweiten Einheit von Q Trägern,
   - Empfang über die aktive Leitung K der Nutzsignale in Form eines Fernnebensprechsignals in der ersten Einheit P von Trägern,
   - Schätzung der Fernnebensprech-Kopplungskoeffizienten ausgehend von den empfangenen Nutzsignalen in der zweiten Einheit Q von Trägern und von dem empfangenen Fernnebensprechsignal in der ersten Einheit P von Trägern.

2. Verfahren nach Anspruch 1, **dadurch gekennzeichnet, dass** das Verfahren die folgenden Schritte an jedem Symbol einer Folge von $n_2$ aufeinanderfolgenden Symbolen anwendet, das auf die Folge von $n_1$ Symbolen folgt:

   - Empfang über die aktive Leitung K von Pilotsignalen in der zweiten Einheit Q von Trägern, wobei die Pilotsignale in der ersten Einheit von Trägern P über N-K inaktive Leitungen des Systems gesendet werden,
   - Empfang über die aktive Leitung K der Pilotsignale in Form eines Fernnebensprechsignals in der ersten Einheit P von Trägern,
   - Schätzung der Fernnebensprech-Kopplungskoeffizienten der N-K inaktiven Leitungen zur Leitung K ausgehend von den empfangenen Pilotsignalen in der zweiten Einheit Q von Trägern und von dem empfangenen Fernnebensprechsignal von Pilotsignalen in der ersten Einheit P von Trägern.

3. Computerprogramm, das Programmcodeanweisungen zur Anwendung der Schritte des Schätzverfahrens nach Anspruch 1 enthält, wenn das Programm von einem Prozessor ausgeführt wird.

4. Aufzeichnungsträger, der von einer Übersetzungsvorrichtung lesbar ist, auf dem das Programm nach Anspruch 3 aufgezeichnet ist.

5. Empfänger einer Leitung K, der zu einem koordinierten System mit Mehrträger-Modulation von N Leitungen gehört, das K-1 aktive Leitungen aufweist, über die Nutzsignale in einer ersten Einheit von Trägern P gesendet werden, **dadurch gekennzeichnet, dass** der Empfänger enthält:

   - Einrichtungen zum Empfang der Nutzsignale in einer zweiten Einheit Q von Trägern über eine zusätzliche aktive Leitung K, die dazu bestimmt ist, in Betrieb genommen zu werden,
   - Einrichtungen zum Empfang über die aktive Leitung K der Nutzsignale in Form eines Fernnebensprechsignals in der ersten Einheit P von Trägern,
   - Einrichtungen zum Schätzen von Fernnebensprech-Kopplungskoeffizienten der K-1 Leitungen zur Leitung K ausgehend von den empfangenen Nutzsignalen in der zweiten Einheit Q von Trägern und von dem empfangenen Fernnebensprechsignal in der ersten Einheit P von Trägern.

6. Koordiniertes System mit Mehrträger-Modulation von N Leitungen, das K-1 aktive Leitungen aufweist, über die Nutzsignale von einem Multiplexer in einer ersten Einheit von Trägern P gesendet werden, wobei der Multiplexer jede der N Leitungen mit einem Empfänger verbindet, **dadurch gekennzeichnet, dass** der Multiplexer enthält:

   - Einrichtungen zum Senden über die K-1 aktiven Leitungen der Nutzsignale in der ersten Einheit P von Trägern,
   - Einrichtungen zum Senden über eine zusätzliche aktive Leitung K, die dazu bestimmt ist, in Betrieb genommen zu werden, der Nutzsignale in einer zweiten Einheit von Q Trägern,
   und dass der Empfänger enthält:

- Einrichtungen zum Empfang der Nutzsignale in der zweiten Einheit Q von Trägern,
- Einrichtungen zum Empfang der Nutzsignale in Form eines Fernnebensprechsignals in der ersten Einheit P von Trägern,
- Einrichtungen zum Schätzen von Fernnebensprech-Kopplungskoeffizienten der K-1 Leitungen zur Leitung K ausgehend von den empfangenen Nutzsignalen in der zweiten Einheit Q von Trägern und von dem empfangenen Fernnebensprechsignal in der ersten Einheit P von Trägern.

Fig. 1

Porteuses P          Porteuses P          Porteuses P

Fig. 2

Fig. 3

Temps →

T_0     T_1

1 ○ ○ ○ ○ ⊛ ⊛ ⊛ ⊛

Données Utiles    Données Utiles connues de K

K-1 ○ ○ ○ ○ ⊛ ⊛ ⊛ ⊛

K ● ● ● ● ○ ○ ○ ○

Pilotes

K+1 ○ ○ ○ ○ ● ● ● ●

Pilotes calculés

N ○ ○ ○ ○ ● ● ● ●

Utilisateurs ↓

# Fig. 4

Utilisateur Actif 1

Utilisateur Actif N

10    11

# Fig. 5A

20_K

-10- ← -21- -22-

# Fig. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1109329 A

**Littérature non-brevet citée dans la description**

• **R. Cendrillon ; M. Moonen ; J. Verlinden ; T. Bostoen ; G. Ginis.** Improved linear crosstalk precompensation for DSL. *IEEE International Conference on Acoustics, Speech and Signal Processing, ICASSP'04,* Mai 2004, vol. 4, 1053-1056